# EUROPEAN PATENT APPLICATION

(11) **EP 1 152 282 A1**
(43) Date of publication of application: **07.11.2001**
(21) Application number: 99959737.0
(22) Date of filing: 09.12.1999
(51) Int. Cl.: G02F 1/1335

(54) **LIQUID-CRYSTAL DISPLAY DEVICE**

(30) Priority: 09.12.1998 JP 34944998
(71) Applicant: Citizen Watch Co. Ltd., Tokyo 188-8511 (JP)
(72) Inventor: AKIYAMA, T., Citizen Watch Co., Ltd., Tech. Lab., Tokorozawa-shi, Saitama 359-8511 (JP); SEKIGUCHI, K., Citizen Watch Co., Ltd., Tech. Lab., Tokorozawa-shi, Saitama 359-8511 (JP)
(74) Representative: Prüfer, Lutz H., Dipl.-Phys.
(86) International application number: JP9906928
(87) International publication number: WO0034822

(57) **Abstract**

A liquid crystal display device comprises a liquid crystal cell (3) comprised of a pair of substrates (32, 34), each transparent, and a liquid crystal layer (31) sealed in a gap formed therebetween, capable of exerting optical changes on incident light by applying a voltage to the liquid crystal layer (31), a first polarizer (1) installed on a visible side of the liquid crystal cell (3), and a second polarizer (5) and an auxiliary light source (10), installed on the side of the liquid crystal cell (3), opposite from the visible side thereof, wherein the first polarizer (1) is a polarizer allowing a first linearly polarized light component to pass therethrough, the second polarizer (5) is a polarizer reflecting a second linearly polarized light component while allowing a third linearly polarized light component vibrating in the direction orthogonal to the direction of vibration of the second linearly polarized light component to pass therethrough, a third polarizer (6) allowing a fourth linearly polarized light component to pass therethrough is disposed between the second polarizer (5) and the auxiliary light source (10), and an intersecting angle formed by the direction of vibration of the third linearly polarized light component and that of the fourth linearly polarized light component is rendered to be in a range of minus 45 degrees to plus 45 degrees.

## Description

### TECHNICAL FIELD

The present invention relates to a liquid crystal display device comprising a liquid crystal display panel composed of a liquid crystal cell incorporating a liquid crystal layer sealed in-between a pair of transparent substrates, and capable of exerting optical effects on incident light when a voltage is applied to the liquid crystal layer, and a polarizer installed on the visible side of the liquid crystal cell, and on the side of the liquid crystal cell, opposite from the visible side thereof, respectively, and an auxiliary light source installed on the side of the liquid crystal panel, opposite from the visible side thereof, that is, a transmissive liquid crystal display device and a transflective liquid crystal display device.

### BACKGROUND TECHNOLOGY

A conventional liquid crystal display device making use of twisted nematic (TN) liquid crystal, supertwisted nematic (STN) liquid crystal, and so forth is constructed such that a liquid crystal cell is sandwiched between two sheets of polarizers. Further, for the polarizers, there have been used absorption-type polarizers having the transmission axis and the absorption axis, crossing each other at right angles, and having a characteristic of allowing a linearly polarized light component vibrating in the direction parallel to the transmission axis thereof to pass therethrough and absorbing a linearly polarized light component vibrating in the direction parallel to the absorption axis thereof. Accordingly, such a conventional liquid crystal display device had poor optical utilization efficiency, indicating a dark display in the case of executing reflective display.

Further, in the case of a transflective liquid crystal display device equipped with a backlight device such as an EL device serving as an auxiliary light source, optical utilization efficiency at the time of reflective display is contrary to that at the time of transmissive display, so that a dark display was indicated in either case.

Hence, there has been proposed a method of combining the absorption-type polarizer which has conventionally been in use with a reflection-type polarizer.

The reflection-type polarizer has the transmission axis and the reflection axis, crossing each other at right angles, and has a characteristic of allowing a linearly polarized light component vibrating in the direction parallel to the transmission axis thereof to pass therethrough and reflecting a linearly polarized light component vibrating in the direction parallel to the reflection axis thereof.

Now, we consider a case where the absorption-type polarizer and the reflection-type polarizer, superimposed on each other, are visually recognized from the side of the absorption-type polarizer.

In this case, if the transmission axes of both the polarizers are in parallel to each other, this will provide a high transmissive characteristic, and if the transmission axes of both the polarizers cross each other at right angles, this will provide a high reflective characteristic. This represents a property fundamentally differing from an absorptive characteristic (black) indicated in the case where two sheets of the absorption-type polarizers are disposed such that the transmission axes thereof cross each other at right angles.

In the case of using two sheets of the absorption-type polarizers, by disposing a reflector on the side of a liquid crystal panel, opposite from a viewer's side, a bright display is effected in the transmitting state by taking advantage of reflection of external light by the agency of the reflector, and a dark display is effected in the absorbing state.

In this case, however, since the external light is transmitted twice through the absorption-type polarizer disposed on top of the reflector, absorption of light occurs, thereby causing a display to appear dark. In addition, because the reflector having a scattering characteristic is used, absorption of the light by the absorption-type polarizers also occurs due to disruption in polarization of light caused by the reflector, so that a dark display results.

Further, in a dark environment where the external light is insufficient, visibility of display of a liquid crystal display device considerably deteriorates, and consequently, an auxiliary light source is often installed inside the liquid crystal display device. In such a case, use is made of a reflector having a transflective characteristic.

Considering a simple case where two sheets of the absorption-type polarizers are superimposed on each other, a bright display effected in the case of reflective display by use of the external light corresponds to a case where the transmission axes of the two sheets of the absorption-type polarizers are in parallel to each other, and in the case of making use of the auxiliary light source as well, a bright display results.

Similarly, a case of effecting dark display corresponds to a case of configuration wherein the two sheets of the absorption-type polarizers are disposed such that the respective transmission axes thereof cross each other at right angles, and in the case of making use of either an external light source or the auxiliary light source, a dark display results.

In contrast with the above-described configuration, there has recently been proposed a method whereby the absorption-type polarizer is used in combination with the reflection-type polarizer in order to implement a transflective liquid crystal display device capable of effecting a brighter display.

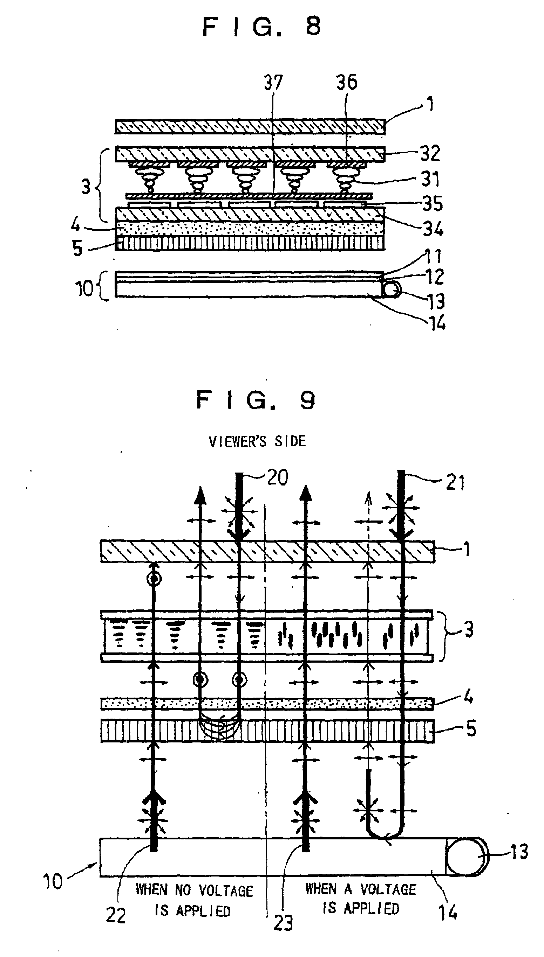

In such a case, as the transflective liquid crystal display device operates differently, operation thereof is described hereinafter with reference to Figs. 8 and 9.

Fig. 8 is a schematic sectional view of a conventional liquid crystal display device, showing the configuration of a panel thereof.

In Fig. 8, a first substrate 32 and a second substrate 34, made of a transparent material such as glass and so forth, respectively, are disposed opposite to each other with a predetermined spacing interposed therebetween, and a liquid crystal layer 31 is sealed in a gap formed therebetween with a sealing member (not shown), thereby constituting a liquid crystal cell 3. For the liquid crystal layer 31, use is made of twisted nematic liquid crystal capable of rotating polarization of light through about 90 degrees during passage of the light from the first substrate 32 to the second substrate 34.

The inner surface (surface in contact with the liquid crystal layer 31) of the first substrate 32 of the liquid crystal cell 3 is provided with M pieces of signal electrodes 36, each made up of a transparent electrode film such as an ITO film. Meanwhile, the inner surface (surface in contact with the liquid crystal layer 31) of the second substrate 34 is provided with N pieces of scanning electrodes 37, each made up of a transparent electrode film, intersecting the respective signal electrodes 36, and thereby a matrix-type liquid crystal display panel having M × N pieces of pixels is made up.

Further, on the visible side (that is, on a viewer's side) of the first substrate 32 of the liquid crystal cell 3, a first polarizer 1 is installed, and on the side of the second substrate 34 opposite from the visible side thereof, an optical scattering layer 4 and a second polarizer 5 are installed.

For the first polarizer 1, an absorption-type polarizer is used, and for the second polarizer 5, a reflection-type polarizer is used. In this case, RDF-C (trade name) manufactured by Sumitomo 3M Co., Ltd. is used for the reflection-type polarizer. The first polarizer 1 and the second polarizer 5 are disposed in directions in which the respective transmission axes thereof coincide with each other.

Further, an auxiliary light source 10 is disposed on the side of the second polarizer 5, opposite from the second substrate 34. The auxiliary light source 10 is provided with a cold cathode tube (a fluorescent tube) 13, adopting a side edge method whereby light is diffused over a planar light source with an optical guide plate 14 made of acrylic resin.

Furthermore, a scattering film 12 is installed on the optical guide plate 14 in order to enhance scattering property, and in addition, a prismatic sheet 11 is installed on top of the scattering film 12 so as to overlie the same in order to provide a directivity.

Next, operation of the liquid crystal display device for effecting bright and dark displays, respectively, either at the time of making use of external light or at the time of making use of the auxiliary light source will be described hereinafter with reference to Fig. 9.

First, the operation at the time of making use of the external light is described by referring to optical path lines 20,21 in Fig. 9.

The optical path line 20 indicates an optical path when no voltage is applied to the liquid crystal cell 3 while the optical path line 21 indicates an optical path when a voltage is applied thereto. If an application environment of the liquid crystal display device is bright, the external light falls on the liquid crystal display device from the viewer's side.

The optical path line 20 is first described.

A linearly polarized light component of incident light from the viewer's side, vibrating in the direction parallel to the transmission axis of the first polarizer 1, is transmitted therethrough by the agency thereof, and falls on the liquid crystal cell 3. The linearly polarized light component incident on the liquid crystal cell 3 is rotated through 90 degrees therein, and outgoes towards the second polarizer 5.

Because the direction of vibration of the linearly polarized light component incident on the second polarizer 5 becomes parallel to the reflection axis of the second polarizer 5 at this point in time, the linearly polarized light component incident thereon is entirely reflected. That is, about half of the incident light from the viewer's side is reflected as it is to the viewer's side. Accordingly, the viewer can visually recognize a display as a bright display at this time.

Subsequently, the optical path line 21 indicating the optical path when a voltage is applied to the liquid crystal cell 3 is described hereinafter.

Voltage at about 3V applied to the liquid crystal cell 3 causes liquid crystal molecules to rise up, so that 90-degree optical rotatory power of the liquid crystal cell 3 is lost Accordingly, the linearly polarized light component incident on the liquid crystal cell 3 falls as it is on the second polarizer 5.

Because a direction of vibration of the linearly polarized light component incident on the second polarizer 5 is parallel to the transmission axis of the second polarizer 5 at this point in time, the linearly polarized light component incident thereon is transmitted therethrough, and falls on the auxiliary light source 10 disposed on the backside of the second polarizer 5. The linearly polarized light component incident on the auxiliary light source 10 is reflected by the optical guide plate 14 while polarization of light is being disrupted, and falls on the second polarizer 5. Further, a portion of the linearly polarized light component falling thereon is transmitted therethrough, and is sent back to the viewer's side.

That is, if a degree of disruption in polarization of light occurs at the auxiliary light source 10, a quantity of light returning to the viewer's side is scant, so that the viewer can visually recognize a display as a dark display.

Further, if an optical absorption layer is installed on the backside of the second polarizer 5, an absorption quantity of light returning to the viewer's side is further increased.

Described above is the operation of the liquid crystal display device for effecting bright and dark displays, respectively, at the time of making use of the external light. With a liquid crystal display device which have been adopted from before, comprising two sheets of the absorption-type polarizers for use in combination with a reflector, light is transmitted through the absorption-type polarizer 4 times both ways, however, with the conventional liquid crystal display device described above, light is transmitted through the absorption-type polarizer only twice both ways, and consequently, a reflectance thereof is high, enabling a bright display to be effected.

Further, RDF-C (trade name) manufactured by Sumitomo 3M Co., Ltd. has a high reflectance, functioning satisfactorily as the reflection-type polarizer having a high reflectance, which is another reason for enabling a bright display.

Subsequently, operation in the case of making use of the auxiliary light source 10 is described by referring to optical path lines 22, 23 shown in Fig. 9. First, the optical path line 22 indicating an optical path when no voltage is applied to the liquid crystal cell 3 is described.

Outgoing light from the auxiliary light source 10 falls on the second polarizer 5. The second polarizer 5 allows a linearly polarized light component of the outgoing light, vibrating in the direction parallel to the transmission axis of the second polarizer 5, to pass therethrough while reflecting a linearly polarized light component vibrating in the direction orthogonal to the transmission axis thereof, and sending the same back to the auxiliary light source 10.

The linearly polarized light component transmitted through the second polarizer 5 is rotated through 90 degrees by the liquid crystal cell 3, and reaches the first polarizer 1. Because the direction of vibration of the linearly polarized light component incident on the first polarizer 1 crosses the transmission axis of the first polarizer 1 at right angles at this point in time, the linearly polarized light component incident thereon is absorbed by the first polarizer 1 and does not outgo to the viewer's side. Accordingly, the viewer can visually recognize a display as a dark display.

Next, the optical path line 23 indicating an optical path when a voltage is applied to the liquid crystal cell 3 is described hereinafter. Because voltage applied to the liquid crystal cell 3 causes the liquid crystal cell 3 to lose optical rotatory power thereof, the linearly polarized light component of the outgoing light from the auxiliary light source 10, transmitted through the second polarizer 5, is not rotated, and falls as it is on the first polarizer 1.

Thereupon, because the direction of vibration of the linearly polarized light component incident on the first polarizer 1 is in parallel to the transmission axis of the first polarizer 1, it is transmitted therethrough, and outgoes to the viewer's side. Accordingly, the viewer can visually recognize a display as a bright display.

Described above is the operation of the liquid crystal display device for effecting bright and dark displays, respectively, at the time of making use of the auxiliary light source 10. Herein, the features of bright and dark displays, respectively, at the time of using either the external light or the auxiliary light source, can be summed up as follows. At the time of using the external light, a bright display is effected in a state where no voltage is applied to the liquid crystal cell 3 while a dark display is effected in a state where a voltage is applied thereto.

At the time of using the auxiliary light source 10, a dark display is effected in a state where no voltage is applied to the liquid crystal cell 3 while a bright display is effected in a state where a voltage is applied thereto.

When this is visually recognized by the viewer, an image is seen as undergoing the so-called gradation reversal between the time of using the external light and the time of using the auxiliary light source. In the case of displaying an image which tends to become difficult to be recognized when gradation reversal occurs, it is known that such a problem can be substantially overcome by causing the liquid crystal display device to display an image with gradation thereof, reversed from that of the image to be displayed in synchronization with lighting up of the auxiliary light source 10.

Herein it is to be noted that a reflectance for the external light when using the external light is in theory close to 50%, and a reflectance for auxiliary light from the auxiliary light source is also close to 50%. This has never been achieved with the transflective liquid crystal display device which has traditionally been in use, employing the absorption-type polarizer.

Thus, the liquid crystal display device described above is in widespread use because it has advantages of enabling bright displays, and a very high utilization efficiency of the auxiliary light source.

However, the conventional liquid crystal display device described above has a major problem for use as a transflective type. That is, in the case of effecting bright and dark displays, respectively, with the use of the auxiliary light source, display unevenness with differing darkness appears in dark display regions.

This is a problem never encountered by the liquid crystal display device which has been in use since before, employing the absorption-type polarizers, and is a unique problem arising due to use of the reflection-type polarizer.

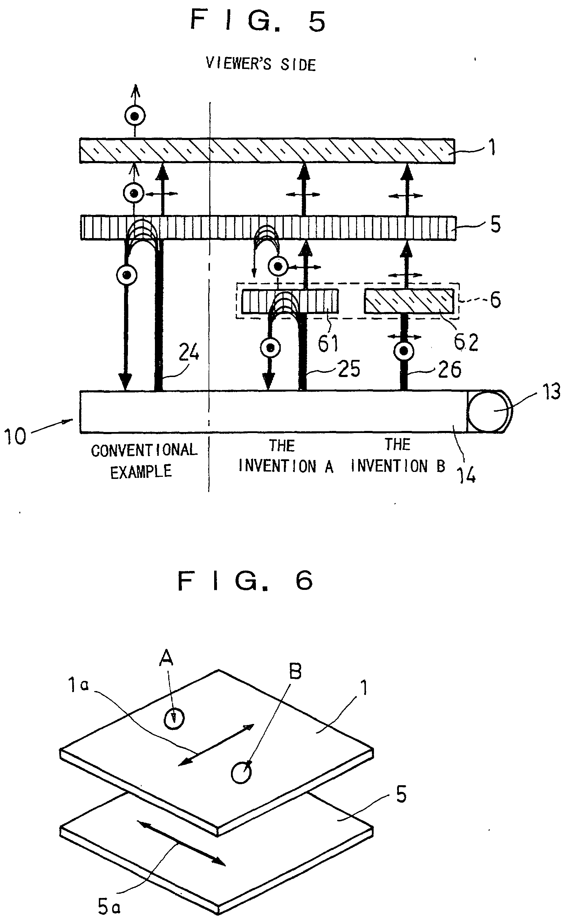

Referring to Figs. 5, 6, 10, and 11, display unevenness occurring in a dark display state is described hereinafter. Shown on the left-hand side of the center line in Fig. 5 is a schematic illustration of a conventional example. Shown on the right-hand side of the center line in Fig. 5 are views illustrating embodiments of the invention as described later on for comparison with the conventional example, and description thereof is omitted herein.

In Fig. 5, the first polarizer 1 and the second polarizer 5 as taken out of the conventional example previously described with reference to Fig. 9 are shown.

The first polarizer 1 is an absorption-type polarizer, and the second polarizer 5 is a reflection-type polarizer, for which RDF-C (trade name) manufactured by Sumitomo 3M Co., Ltd. is used. In Fig. 5, a circle sign with a black spot at the center thereof indicates that the direction of vibration of linearly polarized light is normal to the plane of the figure, and a sign of double arrows oriented in the transverse direction indicates that the direction of vibration of linearly polarized light is parallel to the plane of the figure.

Next, reference is made to Fig. 6. Fig. 6 is a perspective view of the first polarizer 1 and the second polarizer 5, shown in Fig. 5. As shown in the figure, the transmission axis 1a of the first polarizer 1 crosses the transmission axis 5a of the second polarizer 5 at right angles. In Fig. 6, light having a flat spectrum is projected from the backside of the second polarizer 5.

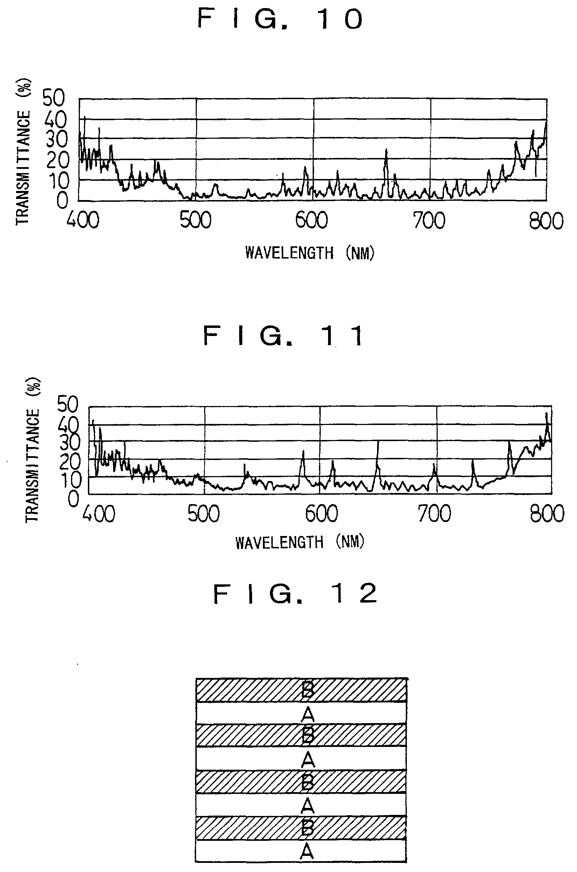

A spectral characteristic of transmittance of the first polarizer 1 at this point in time was measured at measurement points A, B, respectively. The results of such measurement are shown in Figs. 10 and 11, respectively.

It is clearly shown in Figs. 10 and 11 that transmittance on higher sides in the visible light range at the measurement points A and B, respectively, is 10% or higher, showing that a considerable quantity of light has been transmitted through the first polarizer 1.

Since the first polarizer 1 and the second polarizer 5 are disposed such that the transmission axis 1a of the first polarizer 1 crosses the transmission axis 5a of the second polarizer 5 at right angles, it is desirable that a transmittance is ideally 0%. In view of the fact that a common absorption-type polarizer has a transmittance, for example, not higher than 3%, it can be said that a considerable quantity of light has been transmitted therethrough.

This is because a reflective polarization degree of the reflection-type polarizer is not so good as desired, ranging from 85% to 90%. As a result, a linearly polarized light component vibrating in the predetermined direction is transmitted therethrough without being reflected, and is visually recognized as a leaked light component by the viewer.

Further, it is observed in Figs. 10 and 11 that the spectral characteristic of transmittance in the visible light range is not constant, but is uneven. It is also shown that there is a fairly considerable difference in distribution of transmittance between the measurement points A and B. As magnitude of unevenness in the transmittance is as much as sufficiently recognizable by the naked eye, display quality is considerably degraded.

In particular, as there is a strong tendency of the unevenness being seen in a band-like form extending in a given direction, it is easy to recognize the unevenness with the naked eye.

This phenomenon is attributable to the structure of the reflection-type polarizer, and the principle of polarization of light There is, for example, a multi-layer film method for implementing a reflection-type polarizer. Fig. 12 is a schematic sectional view of such a reflection-type polarizer.

As shown in Fig. 12, a multitude of A layers and B layers, having anisotropy in refractive index, respectively, are alternately stacked up.

Further, the A layers and the B layers are disposed such that the refractive index of the A layers differs from that of the B layers in a given direction, while the refractive index of the A layers is equal to that of the B layers in the direction orthogonal to the given direction.

Thereupon, by setting the sum of the products of a thickness of the respective layers and refractive index thereof in the given direction where refractive indices of the respective layers differ from each other to 1/2 λ only a linearly polarized light component of light at a wavelength λ vibrating in the given direction comes to be reflected, and a linearly polarized light component vibrating in the direction orthogonal to the given direction comes to be transmitted.

By disposing a multitude of the A layers and the B layers such that a phenomenon described is caused to occur at all wavelengths in the visible light range, a reflection-type polarizer can be implemented. Such a reflection-type polarizer is disclosed in International Publication WO 95/17692.

However, it is difficult in practice to maintain evenness of a film thickness in a wide area due to fluctuation from a fabrication point of view. Unevenness in the spectral characteristic of transmittance is induced by such unevenness of the film thickness.

Since the film thickness is actually on the order of 100 nm, it is considerably difficult in practice to render the film thickness to be uniform over several tens of centimeters in length.

Further, for ensuring an even spectral characteristic of transmittance in the visible light range, the more the number of the layers there are, the more excellent the polarization characteristic of the reflection-type polarizer becomes, however, the number thereof on the order of 100 layers is ideal from the viewpoint of actual mass production. Inability to secure a sufficient number of the layers will be a cause for the unevenness.

As described in the foregoing, the reflection-type polarizer has problems of deterioration in the reflective polarization degree and unevenness in the spectral characteristic of transmittance, induced by fluctuation during fabrication, and limitations to the number of the layers of the multilayer film.

As a result, there have arisen problems in that display unevenness occurs as seen from the viewer's side at the time of making use of the auxiliary light source, thereby considerably degrading display quality.

The invention has been developed to overcome the problems described above which the liquid crystal display device employing the reflection-type polarizer encountered, and it is an object of the invention to enable a high quality display to be effected without causing display unevenness to occur in the case of transmissive display making use of the auxiliary light source

### DISCLOSURE OF THE INVENTION

To this end, the invention is a liquid crystal display device comprising a liquid crystal cell comprised of a first substrate and a second substrate, each transparent, disposed with a predetermined spacing so as to oppose each other, and a liquid crystal layer sealed in a gap formed therebetween, capable of exerting optical changes on incident light by applying a voltage to the liquid crystal layer, a first polarizer installed on the outer side of the first substrate disposed on a visible side of the liquid crystal cell, a second polarizer installed on the outer side of the second substrate disposed on the side of the liquid crystal cell, opposite from the visible side thereof, and an auxiliary light source disposed on the side of the second polarizer, opposite from the liquid crystal cell, and the liquid crystal display device is constructed as follows.

The first polarizer is a polarizer allowing a first linearly polarized light component to pass therethrough,
the second polarizer is a polarizer reflecting a second linearly polarized light component while allowing a third linearly polarized light component vibrating in the direction orthogonal to the direction of vibration of the second linearly polarized light component to pass therethrough,
a third polarizer allowing a fourth linearly polarized light component to pass therethrough is disposed between the second polarizer and the auxiliary light source, and
an intersecting angle formed by the direction of vibration of the third linearly polarized light component and that of the fourth linearly polarized light component is in a range of minus 45 degrees to plus 45 degrees.

The third polarizer is preferably an absorption-type polarizer allowing the fourth linearly polarized light component to pass therethrough while absorbing a fifth linearly polarized light component vibrating in the direction orthogonal to the direction of vibration of the fourth linearly polarized light component.

Or the third polarizer may be a reflection-type polarizer allowing the fourth linearly polarized light component to pass therethrough while reflecting a fifth linearly polarized light component vibrating in the direction orthogonal to the direction of vibration of the fourth linearly polarized light component.

The auxiliary light source is preferably a backlight device making use of a cold cathode tube, a light emitting diode, or an electroluminescent device.

The third polarizer may be bonded to the second polarizer.

The third polarizer may be fixedly attached to the auxiliary light source or a constituting member thereof, and may be separated from the second polarizer.

Further, an optical scattering layer is preferably installed at any suitable position on a visible side of the second polarizer.

In accordance with another aspect of the invention, an optical semi-absorption layer may be disposed at any of positions between the second polarizer and the third polarizer, between the third polarizer and the auxiliary light source, and between constituents of the auxiliary light source, respectively, such that the direction of vibration of the third linearly polarized light component substantially coincides with that of the fourth linearly polarized light component.

It is desirable that the optical semi-absorption layer has a uniform absorption characteristic substantially in the entire visible light region and absorptivity thereof is not higher than 60%.

Further, an optical scattering layer is preferably installed at any suitable position on a visible side of the second polarizer.

### BRIEF DESCRIPTION OF THE DRAWINGS

Fig. 1 is a schematic sectional view of a first embodiment of a liquid crystal display device according to the invention, showing a configuration of a panel thereof;
Fig. 2 is a sectional view of principal parts of the liquid crystal display device, for illustrating the operation thereof;
Fig. 3 is a schematic sectional view of a second embodiment of a liquid crystal display device according to the invention, showing a configuration of a panel thereof;
Fig. 4 is a sectional view of principal parts of the liquid crystal display device, for illustrating the operation thereof;
Fig. 5 is a schematic representation for illustrating the fundamental operation of the liquid crystal display device according to the invention in comparison with a conventional example;
Fig. 6 is a perspective view of a first polarizer and a second polarizer, shown in Fig. 5;
Fig. 7 is a diagram showing a spectral characteristic of transmittance as measured from the viewer's side in the case of the invention B in Fig. 5;
Fig. 8 is a schematic sectional view of a conventional liquid crystal display device, showing a configuration of a panel thereof:
Fig. 9 is a sectional view of principal parts of the liquid crystal display device, for illustrating the operation thereof;
Figs. 10, and 11 are diagrams showing a spectral characteristic of transmittance in the case of the conventional example in Fig. 5 as measured at measurement points A and B shown in Fig. 6, respectively; and
Fig. 12 is a schematic sectional view showing the structure of a reflection-type polarizer.

### BEST MODE FOR CARRYING OUT THE INVENTION

Preferred embodiments of a liquid crystal display device according to the invention will be described in more detail hereinafter with reference to the attached drawings.

### Fundamental Operation of the Invention: Figs. 5 to 7

Prior to description of embodiments of the invention in concrete terms, the fundamental operation of the liquid crystal display device according to the invention is described with reference to Figs. 5 to 7.

Fig. 5 is the view which has been referred to in description of Background Technology, showing only the auxiliary light source 10 and the respective polarizers (polarized light separator), taken out of the conventional liquid crystal display device and the liquid crystal display device according to the invention, respectively, omitting the liquid crystal cell and so forth thereof. Further, in Fig. 5, the circle sign with the black spot at the center thereof indicates that the direction of vibration of linearly polarized light is normal to the plane of the figure, and the sign of the double arrows oriented in the transverse direction indicates that the direction of vibration of linearly polarized light is parallel to the plane of the figure.

With the conventional example shown on the left-hand side of the center line in Fig. 5, the auxiliary light source 10, the second polarizer 5, and the first polarizer 1 are disposed in that order from the underside thereof.

Meanwhile, with the liquid crystal display devices according to the invention, shown on the right-hand side of the center line in the figure, an auxiliary light source 10, a third polarizer 6, a second polarizer 5, and a first polarizer 1 are disposed in that order from the underside thereof.

In Fig. 5, a reflection-type polarizer is used for the second polarizer 5, and is disposed such that the transmission axis thereof is parallel to the plane of the figure.

For the first polarizer 1, an absorption-type polarizer is used, and is disposed such that the transmission axis thereof is normal to the plane of the figure. In the case of the invention A, a reflection-type polarizer 61 is used for the third polarizer 6, and is disposed such that the transmission axis thereof is parallel to the plane of the figure. In the case of the invention B, an absorption-type polarizer 62 is used for the third polarizer 6, and is disposed such that the transmission axis thereof is parallel to the plane of the figure.

In Fig. 5, the transmission axes of the respective polarizers are oriented such that the transmission axis of the first polarizer 1 is rotated by 90 degrees relative to those of the other polarizers since a liquid crystal layer is not interposed therebetween. That is, this state is equivalent to a state where no voltage is applied to the liquid crystal layer.

Fig. 6 is a perspective view of the first polarizer 1 and the second polarizer 5, showing that these polarizers are disposed such that the transmission axis 1a of the first polarizer 1 crosses the transmission axis 5a of the second polarizer 5 at right angles.

With such a configuration as described above, at the time of making use of external light, the external light is reflected by the second polarizer 5, and is sent back to a viewer's side, thereby effecting a bright display while at the time of making use of the auxiliary light source 10, auxiliary light is absorbed by the first polarizer 1, and is not sent back to the viewer's side, thereby effecting a dark display. In Fig. 5, only the auxiliary light emitted from the auxiliary light source 10 is shown.

First, the conventional example is described. With the conventional example, outgoing light traveling along an optical path line 24 of the auxiliary light falls on the second polarizer 5, a linearly polarized light component thereof, vibrating in the direction parallel to the plane of the figure, is transmitted therethrough, and is absorbed by the first polarizer 1.

However, about 10% of a linearly polarized light component thereof, vibrating in the direction normal to the plane of the figure, is transmitted through the second polarizer 5 due to a poor reflective polarization degree of the reflection-type polarizer, and falls on the first polarizer 1. Further, as the direction of vibration of the linearly polarized light component coincides with the transmission axis of the first polarizer 1, the linearly polarized light component is transmitted through the first polarizer 1 towards the viewer's side. Further, magnitude of such transmission varies depending on variations in the reflective polarization degree of the second polarizer 5, that is, the reflection-type polarizer, which is visually recognized on the viewer's side as display unevenness.

In contrast, with the liquid crystal display devices according to the invention, the third polarizer 6 is disposed between the auxiliary light source and the second polarizer 5.

Operation in this case is described hereinafter with respect to the invention A and the invention B, respectively.

First, with the invention A, the reflection-type polarizer 61 is used for the third polarizer 6. As for outgoing light traveling along an optical path line 25 from the auxiliary light source 10, a linearly polarized light component thereof, vibrating in the direction parallel to the plane of the figure, is transmitted through the reflection-type polarizer 61, falls on the second polarizer 5, and is transmitted therethrough as well because the direction of vibration of the linearly polarized light component is parallel to the transmission axis of the second polarizer 5, falling on the first polarizer 1 to be absorbed thereby.

Further, about 90% of a linearly polarized light component thereof, vibrating in the direction normal to the plane of the figure and traveling along the optical path line 25, is reflected by the reflection-type polarizer 61, and is sent back to the auxiliary light source 10. Remaining about 10% of the linearly polarized light component is transmitted through the reflection-type polarizer 61, however, because the direction of vibration of the linearly polarized light component crosses the transmission axis of the second polarizer 5 at right angles, 90% or more thereof is further reflected, so that only 2% or less of the linearly polarized light component is transmitted through the second polarizer 5. Accordingly, the outgoing light emitted from the auxiliary light source 10 is hardly comes out to the viewer's side.

It follows that not only the auxiliary light from the auxiliary light source 10 does not outgo to the viewer's side, but also display unevenness never occurs even if a polarization degree of the second polarizer 5 is uneven.

Next, in the case of the invention B, the absorption-type polarizer 62 is used for the third polarizer 6. Accordingly, outgoing light traveling along an optical path line 26 from the auxiliary light source 10 first falls on the absorption-type polarizer 62, and a linearly polarized light component thereof, vibrating in the direction normal to the plane of the figure, is absorbed by the absorption-type polarizer 62. Generally, an absorption-type polarizer has a high absorptive polarization degree of 95% or more.

Consequently, since the linearly polarized light component, vibrating in the direction normal to the plane of the figure, does not outgo to the viewer's side, display unevenness never occurs even if the polarization degree of the second polarizer 5 is uneven.

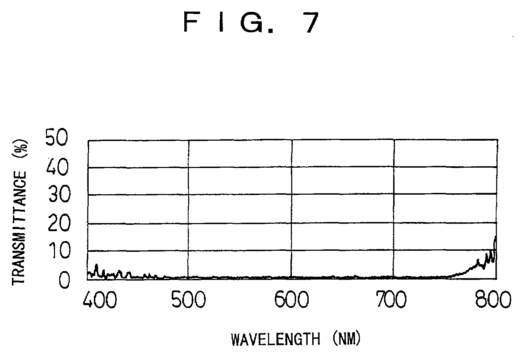

Fig. 7 shows a spectral characteristic of transmittance as measured from the viewer's side in the case of the invention B. In the figure, the vertical axis indicates transmittance, and the horizontal axis indicates wavelengths. The auxiliary light source 10 has in fact an uneven spectral characteristic, however, the figure shows a diagram of a spectral characteristic obtained through recalculation on the assumption that it has an even spectral characteristic.

According to the diagram in Fig. 7, transmittance is 1% or less on average, and further, a phenomenon wherein transmittance becomes higher in the intrinsic wavelength range is not observed either. This demonstrates that the intrinsic display unevenness occurring in the case of making use of the reflection-type polarizer is completely eliminated.

Furthermore, if an optical semi-absorption layer is installed on an either side of the third polarizer 6, between the second polarizer 5 and the auxiliary light source 10, this will improve contrast as seen from the viewer's side in the case of using the external light.

Even in this case, the advantageous effect of installing the third polarizer 6 will not be affected, and occurrence of display unevenness is prevented.

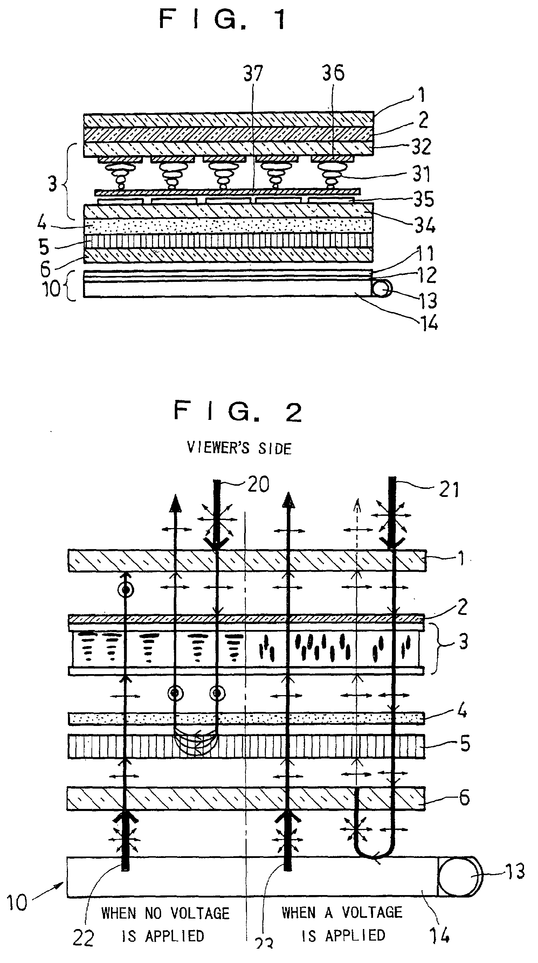

### First Embodiment: Figs. 1 and 2

A first embodiment of a liquid crystal display device according to the invention is described hereinafter with reference to Figs. 1 and 2.

Fig. 1 is a schematic sectional view of the liquid crystal display device, showing the configuration of a panel thereof, and Fig. 2 is a schematic representation for illustrating operation thereof. In these figures, parts corresponding to those previously described with reference to Figs. 8 and 9 are denoted by like reference numerals, and description thereof is simplified.

With this embodiment, a liquid crystal cell 3 is an STN cell comprising a liquid crystal layer 31 with STN liquid crystal sealed therein.

In the liquid crystal cell 3, the liquid crystal layer 31 composed of the STN liquid crystal is sandwiched between a first substrate 32 and a second substrate 34, made up of a transparent glass substrate, respectively. The first substrate 32 and the second substrate 34 are bonded with each other by a sealing member (not shown).

There are formed a multitude of signal electrodes 36 made up of a transparent electrode on the inner surface of the first substrate 32, in such a way as to run in the direction normal to the plane of the figure, and there are also formed a multitude of scanning electrodes 37 made up of a transparent electrode on the inner surface of the second substrate 34, in such a way as to run in the direction parallel to the plane of the figure, thereby constituting pixels at crossover points of the respective signal electrodes 36 and the respective scanning electrodes 37. Color filters 35 are formed between the second substrate 34 and the scanning electrodes 37.

A retardation film 2 is disposed on a viewer's side (visible side) of the liquid crystal cell 3, and an absorption-type polarizer as the first polarizer 1 is further disposed on top of the retardation film 2. An optical scattering layer 4 is installed on the side of the liquid crystal cell, opposite from the visible side thereof, and further, on the underside of the optical scattering layer 4, a reflection-type polarizer as the second polarizer 5, and an absorption-type polarizer as the third polarizer 6 are installed in that order.

In addition, an auxiliary light source 10 is disposed on the underside of the third polarizer 6. The auxiliary light source 10 comprises a cold cathode tube 13, an optical guide plate 14, and a prismatic sheet 11 as well as a scattering film 12 which are bonded onto the optical guide plate 14, thereby constituting a backlight device.

With this embodiment, liquid crystal layer having a twisted angle of 240° is used for the STN liquid crystal layer of the liquid crystal cell 3, but the STN liquid crystal layer is not limited thereto.

The absorption-type polarizer as the first polarizer 1 is disposed such that the transmission axis thereof is oriented in the direction parallel to the plane of the figure. The retardation film 2 having a phase difference value of 540 nm is used, and is disposed such that the retardation axis thereof is rotated through 40° relative to the first polarizer 1.

The reflection-type polarizer as the second polarizer 5 disposed on the side of the liquid crystal cell 3, opposite from the visible side thereof, is disposed such that the transmission axis thereof is parallel to the plane of the figure, and the absorption-type polarizer as the third polarizer 6 disposed underneath the second polarizer 5 as well is disposed such that the transmission axis thereof is parallel to the plane of the figure.

The liquid crystal display device according to this embodiment is the same in configuration as the conventional liquid crystal display device shown in Fig. 6 except that the retardation film 2 and the third polarizer 6 are installed.

For the second polarizer 5, RDF-C (trade name) manufactured by Sumitomo 3M Co., Ltd., commonly available in the market, is used. This product is a reflection-type polarizer with an adhesive having a scattering function already applied thereto, and by bonding the same to the second substrate 34, both the optical scattering layer 4 and the reflection-type polarizer can be formed at a time.

Further, the respective color filters 35 comprise red (R), green (G), and blue (B) filters disposed alternately in a longitudinal stripe pattern running along the direction of the respective signal electrodes 36. As a result, this embodiment of the invention can function as a transflective color liquid crystal display device.

Needless to say, the color filters are not directly related to the invention, and if the color filters 35 are not disposed, display in black and white can be effected with the use of the same configuration as that of this embodiment.

In this case, the color filters 35 are set to have a transmittance higher than that for a conventional transmissive type. The reason for this is to prevent the transmittance thereof from becoming lower because incident light from the viewer's side is transmitted through the color filters 35 twice in the case of reflective display.

Operation of this embodiment is described hereinafter with reference to Fig. 2. Fig. 2 is a sectional view of principal parts of the first embodiment for illustrating the operation thereof.

Referring to Fig. 2, there are disposed the absorption-type polarizer as the first polarizer 1, the retardation film 2, the liquid crystal cell 3, the optical scattering layer 4, the second and third polarizers 5, 6, and the auxiliary light source 10 of the backlight device in that order from the visible side.

Shown on the left-hand side of the center line in the figure is a schematic illustration of a state where no voltage is applied to the liquid crystal cell 3 while a schematic illustration of a state where a voltage is applied thereto is shown on the right-hand side of the center line. Optical path lines 20 and 21 schematically illustrate optical paths at the time of reflective display by use of external light incoming from the viewer's side in the case where the auxiliary light source 10 is not lit up, and the optical path line 20 indicates the optical path when no voltage is applied to the liquid crystal cell 3 while the optical path line 21 indicates the optical path when a voltage is applied thereto.

Optical path lines 22 and 23 schematically illustrate optical paths of outgoing light from the auxiliary light source 10 at the time of transmissive display in the case where the auxiliary light source 10 is lit up, and the optical path line 22 indicates the optical path when no voltage is applied to the liquid crystal cell 3 while the optical path line 23 indicates the optical path when a voltage is applied thereto.

In the figure, directions of polarization of linearly polarized light are shown at various points on the respective optical path lines, and respective arrows indicate a linearly polarized light component vibrating in the direction parallel to the plane of the figure while respective double circles indicate a linearly polarized light component vibrating in the direction normal to the plane of the figure.

The liquid crystal display device according to this embodiment functions as a reflective liquid crystal display device in an environment where a sufficient quantity of external light is available. In such a case, satisfactory contrast can be obtained even without lighting up the auxiliary light source 10.

Next, operation of the liquid crystal display device according to this embodiment when no voltage is applied to the liquid crystal cell 3 is described by referring to the optical path line 20.

External light incoming from the viewer's side falls on the first polarizer 1, whereupon only a linearly polarized light component thereof, vibrating in the direction of the transmission axis of the first polarizer 1, parallel to the plane of the figure, is transmitted therethrough, and a linearly polarized light component thereof, vibrating in the direction orthogonal to the direction of the transmission axis thereof is absorbed.

The linearly polarized light component as transmitted falls on the retardation film 2, and the liquid crystal cell 3, whereupon the linearly polarized light component incoming through the retardation film 2 and the liquid crystal cell 3 outgoes as elliptically polarized light regarded as a linearly polarized light component, optically rotated through about 90° and vibrating in the direction orthogonal to the plane of the figure.

Outgoing polarized light undergoes scattering at the optical scattering layer 4, but falls on the second polarizer 5 without changing a state of polarization thereof. As a linearly polarized light component falling thereon at this point in time vibrates in the direction orthogonal to the transmission axis of the second polarizer 5, the linearly polarized light component is reflected, and is sent back to the liquid crystal cell 3, returning to the viewer's side traveling along the same optical path. Hereupon, about 20% or more of the external light is reflected and is sent back to the viewer's side, so that the viewer can visually recognize a display as a bright display.

Operation of the liquid crystal display device according to this embodiment when a voltage is applied to the liquid crystal cell 3 will be described as follows. Incident light transmitted through the first polarizer 1 is not subjected to optical rotation through 90° by the agency of the liquid crystal cell 3, and falls on the optical scattering layer 4 and the second polarizer 5, keeping in a state of the linearly polarized light component vibrating in the direction parallel to the plane of the figure. As the direction of vibration of the linearly polarized light component coincides with the transmission axis of the second polarizer 5 at this point in time, the linearly polarized light component is transmitted through the second polarizer 5 as well, and falls on the absorption-type polarizer as the third polarizer 6, whereupon because the direction of vibration of the linearly polarized light component coincides with the transmission axis of the third polarizer 6, the linearly polarized light component is transmitted through the third polarizer 6 as well, thereby falling on the auxiliary light source 10.

Since the auxiliary light source 10 is provided with the optical guide plate 14, the prismatic sheet 11, and the scattering film 12 as shown in Fig. 1, the linearly polarized light component falling on the auxiliary light source 10 is nearly completely unpolarized, and is reflected thereby as unpolarized light before being sent back to the third polarizer 6. Hereupon, only the linearly polarized light component vibrating in the direction of the transmission axis of the third polarizer 6 is transmitted therethrough, and is sent back to the viewer's side.

According to the results of measurement taken by the inventors, a quantity of light sent back to the viewer's side at this point in time is 5% or less of the incoming external light. Accordingly, the viewer can visually recognize a display as a dark display. Described above is the operation for effecting bright and dark displays, respectively, at the time of making use of the external light

In another case where a sufficient quantity of external light is not available due to a dark environment, the liquid crystal display device according to the invention functions as a transmissive liquid crystal display device making use of auxiliary light by lighting up the auxiliary light source 10. When the auxiliary light source 10 is lit up, sufficient contrast can be obtained even in a dark environment.

First, operation when no voltage is applied to the liquid crystal cell 3 is described by referring to the optical path line 22.

Outgoing light from the auxiliary light source 10 falls on the third polarizer 6, and only a linearly polarized light component thereof, vibrating in the direction of the transmission axis of the third polarizer 6, parallel to the plane of the figure, is transmitted therethrough, and a linearly polarized light component thereof, vibrating in the direction orthogonal to the transmission axis, is absorbed. Because the direction of vibration of the linearly polarized light component as transmitted coincides with the transmission axis of the second polarizer 5, the linearly polarized light component is transmitted therethrough, and falls on the liquid crystal cell 3 via the optical scattering layer 4.

Hereupon, the linearly polarized light component falling on the liquid crystal cell 3 outgoes as elliptically polarized light that can be regarded as a linearly polarized light component, optically rotated through about 90° by the agency of the retardation film 2 and the liquid crystal cell 3, and vibrating in the direction orthogonal to the plane of the figure.

As the outgoing polarized light vibrates in the direction orthogonal to the transmission axis of the first polarizer 1, the linearly polarized light component is absorbed by the first polarizer 1, and does not outgo to the viewer's side, whereupon the viewer can visually recognize a display as a dark display.

Another operation when a voltage is applied to the liquid crystal cell 3 is described hereinafter by referring to the optical path line 23.

A linearly polarized light component of the outgoing light from the auxiliary light source 10, vibrating in the direction parallel to the plane of the figure, is transmitted through the third polarizer 6, and is then transmitted through the second polarizer 5 and the optical scattering layer 4, falling on the first polarizer 1 keeping in a state of the linearly polarized light component vibrating in the direction parallel to the plane of the figure without being optically rotated through 90° by the agency of the liquid crystal cell 3. Hereupon, since the direction of vibration of the linearly polarized light component coincides with the transmission axis of the first polarizer 1, the linearly polarized light component is transmitted therethrough as well, and outgoes to the viewer's side.

According to the results of measurement taken by the inventors, a quantity of light outgoing to the viewer's side is 20% or more of the outgoing light from the auxiliary light source 10. Accordingly, the viewer can visually recognize a display as a bright display. Described above is the operation for effecting bright and dark displays, respectively, at the time of making use of the auxiliary light.

As described in the foregoing, it is evident that, with this embodiment as well, bright display as well as dark display in high contrast can be effected at the time of making use of external light and the auxiliary light source, respectively, as with the case of the conventional liquid crystal display device.

Next, reduction in display unevenness occurring at the time of making use of the auxiliary light source, that is, an object of the invention, is described by referring again to the optical path line 22 in Fig. 2.

As the liquid crystal display device according to this embodiment is provided with the third polarizer 6 unlike the conventional liquid crystal display device, the outgoing light from the auxiliary light source 10 falls on the third polarizer 6 at first.

The third polarizer 6 allows the linearly polarized light component of the outgoing light, vibrating in the direction parallel to the transmission axis thereof to pass therethrough, and absorbs the linearly polarized light component vibrating in the direction orthogonal to the transmission axis.

Since the transmission axis of the third polarizer 6 is rendered to coincide with that of the second polarizer 5, the linearly polarized light component transmitted through the absorption-type polarizer serving as the third polarizer 6 is transmitted through the reflection-type polarizer serving as the second polarizer 5 as well.

On the other hand, as the linearly polarized light component vibrating in the direction orthogonal to the plane of the figure hardly falls on the second polarizer 5, there is no possibility of transmitted light becoming uneven across the surface of the second polarizer 5 even if wavelength dependency of transmittance of the second polarizer 5 is uneven across the surface thereof.

Accordingly, display unevenness is not visible at all on the viewer's side. Thus, by reducing the linearly polarized light component vibrating in the direction parallel to the reflection axis of the second polarizer 5 before the same falls on the second polarizer 5, it is possible to prevent degradation of image quality from occurring due to unevenness in a reflective polarization degree across the surface of the second polarizer 5.

Herein, magnitude of advantageous effects is described on the basis of data on tests conducted by the inventors. Referring again to Figs. 10 and 7 previously described under the heading of operation, it is to be pointed out that the transmittance at 10% or higher as shown in Fig. 10 is decreased to 2% or lower as shown in Fig. 7.

Thus, it is clearly demonstrated from the results of actual measurement that light shielding property has been considerably enhanced.

Furthermore, it is also shown from the results of the actual measurement that the wavelength dependency of transmittance, appearing in a pronounced way in Fig. 10, is not observed at all in Fig. 7. It can be easily presumed that substantially similar results will be obtained even if the liquid crystal cell 3 is interposed.

As described above, it is evident on the basis of the results of the actual measurement that the advantageous effects of disposing the absorption-type polarizer as the third polarizer 6 are considerable.

With this embodiment, the absorption-type polarizer is disposed on the underside of the reflection-type polarizer, however, another reflection-type polarizer may be disposed in place of the absorption-type polarizer. In such a case, a configuration is adopted such that two sheets of the reflection-type polarizers are superimposed on each other such that the respective transmission axes thereof are oriented in the same direction.

Because a polarization degree of the two sheets of the reflection-type polarizers superimposed on each other is enhanced in effect, the wavelength dependency of the polarization degree of the reflection-type polarizers is alleviated. According to the results of tests conducted by the inventors, an effect similar to that for the case where the absorption-type polarizer is disposed was obtained.

Furthermore, with this embodiment, the absorption-type polarizer is disposed directly underneath the reflection-type polarizer, however, a configuration of these part is not limited thereto.

As can be easily presumed from previous description under the heading of operation, the similar effect can be obtained if the absorption-type polarizer as the third polarizer 6 is disposed at any suitable position on the auxiliary light source 10 side of the reflection-type polarizer as the second polarizer 5.

In the auxiliary light source 10 wherein the prismatic sheet 11 and the scattering film 12 are installed on top of the optical guide plate 14, the similar effect can be obtained by disposing the third polarizer 6 underneath, for example, the prismatic sheet 11 or the scattering film 12.

In this case, if material interposed between the second polarizer 5 and the third polarizer 6 has anisotropy in refractive index, and the like, linearly polarized light is turned into elliptically polarized light, thereby reducing the advantageous effects.

However, as a result of the linearly polarized light being fumed into elliptically polarized light, absorption of the polarized light increases as seen from the viewer's side at the time of making use of the external light, so that an advantage of enhanced contrast is gained.

According to the results of tests conducted by the inventors, it has been confirmed that even in the case of disposing a quarter-wavelength plate between the second polarizer 5 and the third polarizer 6, display unevenness can be reduced to a negligible level in terms of display quality.

Further, with this embodiment, the reflection-type polarizer and the absorption-type polarizer are disposed such that the respective transmission axes thereof coincide with each other. In such a case, the effect of reducing display unevenness can be maximized, however, it can be presumed from the foregoing description that display unevenness can be reduced even if the respective transmission axes thereof are deviated from each other.

It was shown from the results of tests conducted by varying an intersecting angle formed by the respective transmission axes by every 5 degrees that display unevenness could be improved to the extent that display unevenness was hardly recognized when the intersecting angle was 45 degrees or less, and display unevenness was nearly completely eliminated when the intersecting angle was 35 degrees or less.

Further, by deviating the transmission axis of the absorption-type polarizer from that of the reflection-type polarizer, contrast at the time of making use of the external light can be enhanced.

Now, referring again to the optical path line 21 in Fig. 2, the linearly polarized light component vibrating in the direction parallel to the plane of the figure, transmitted through the second polarizer 5, falls on the third polarizer 6, whereupon, as the respective transmission axes do not coincide with each other, absorption of the linearly polarized light component by the absorption axis of the third polarizer 6, orthogonal to the transmission axis, occurs.

The greater the intersecting angle formed by the respective transmission axes is, the more magnitude of the absorption occurring at this point in time increases. A portion of the linearly polarized light component, not absorbed, falls on the auxiliary light source 10, and is sent back again to the third polarizer 6 after subjected to disruption in polarization, only a linearly polarized light component vibrating in the direction parallel to the transmission axis of the third polarizer 6 being transmitted therethrough.

As the direction of vibration of the linearly polarized light component transmitted through the third polarizer 6 does not coincide with the transmission axis of the second polarizer 5, only a portion of the linearly polarized light component is transmitted therethrough. Accordingly, a quantity of light returning to the viewer's side is scant, and thereby contrast is improved better than contrast in the case where the respective transmission axes of the second polarizer 5 and the third polarizer 6 are rendered to coincide with each other.

However, as a result of deviating the respective transmission axes from each other, magnitude of absorption of the auxiliary light from the auxiliary light source 10 also increases at the time of making use of the auxiliary light source, and consequently, reduction in screen luminance results.

Accordingly, because there is a trade-off between contrast at the time of using the external light and transmittance for the auxiliary light from the auxiliary light source in the case where the respective polarizers are disposed such that the respective transmission axes thereof are deviated from each other, it is necessary to select an optimum intersecting angle taking into consideration an application environment, power consumption of the backlight, and so forth.

In any case, it is to be pointed out that display unevenness can be reduced by disposing the third polarizer 6, and it is possible to optimally set both magnitude of such reduction and display quality.

Thus, with the liquid crystal display device employing the reflection-type polarizer, according to this embodiment of the invention, display unevenness can be nearly completely eliminated without impairing contrast and screen luminance.

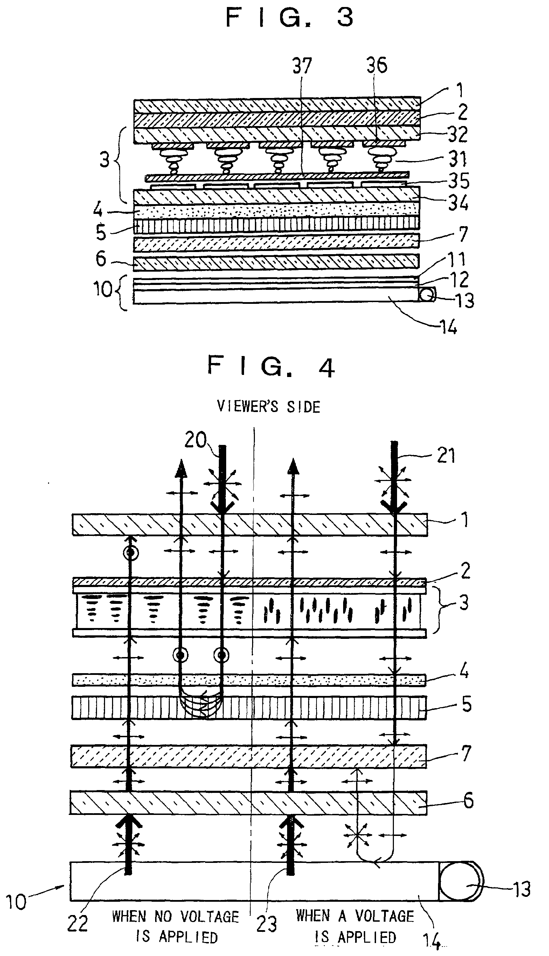

### Second Embodiment: Figs. 3 and 4

Fig. 3 is a schematic sectional view of a second embodiment of a liquid crystal display device according to the invention, showing the configuration of a panel thereof, and in the figure, parts corresponding to those in Fig. 1 are denoted by like reference numerals, and description thereof is omitted.

The second embodiment of the invention differs from the first embodiment previously described with reference to Fig. 1 only in that an optical semi-absorption layer 7 is disposed between a second polarizer 5 and a third polarizer 6.

The optical semi-absorption layer 7 is formed by printing on the backside face of the second polarizer 5 which is a reflection-type polarizer by a printing method with ink containing carbon for use as an optical absorbent The optical semi-absorption layer 7 has a transmittance which is substantially uniform in the visible light region, and is 60% on the average.

Among optical semi-absorption layers commonly available in the market, there is TDF (trade name) manufactured by Sumitomo 3M Co., Ltd.

This is provided with an optical scattering layer with beads diffused in an adhesive, formed on one surface of a reflection-type polarizer, and with an optical translucent layer with black ink applied thereto, formed on the other surface thereof. The optical translucent layer has a transmittance on the order of 50%.

This product is handy because an optical scattering layer 4, the second polarizer 5, and the optical semi-absorption layer 7 can be formed at a time if the same is adopted.

Operation of this embodiment is described hereinafter with reference to Fig. 4. Fig. 4 is a sectional view similar to Fig. 2, for illustrating the operation of the second embodiment of the invention.

Referring to Fig. 4, there are disposed a first polarizer 1, a retardation film 2, a liquid crystal cell 3, the optical scattering layer 4, the second polarizer 5, the optical semi-absorption layer 7, the third polarizer 6, and an auxiliary light source 10 in that order from the visible side.

Shown on the left-hand side of the center line in the figure is a schematic illustration of a state where no voltage is applied to the liquid crystal cell while a state where a voltage is applied thereto is shown on the right-hand side of the center line.

Optical path lines 20 and 21 schematically illustrate optical paths of external light at the time of reflective display by use of external light incoming from a viewer's side in the case where the auxiliary light source 10 is not lit up, and the optical path line 20 indicates the optical path when no voltage is applied while the optical path line 21 indicates the optical path when a voltage is applied.

Optical path lines 22 and 23 schematically illustrate optical paths of light outgoing from the auxiliary light source 10 at the time of transmissive display by use of the auxiliary light in the case where the auxiliary light source 10 is lit up, and the optical path line 22 indicates the optical path when no voltage is applied while the optical path line 23 indicates the optical path when a voltage is applied.

In the figure, directions of polarization of linearly polarized light are shown at various points on the respective optical path lines, respective arrows indicating a linearly polarized light component vibrating in the direction parallel to the plane of the figure while respective double circles indicating a linearly polarized light component vibrating in the direction normal to the plane of the figure.

The liquid crystal display device according to this embodiment functions as a reflective liquid crystal display device in an environment where a sufficient quantity of external light is available. In this case, sufficient contrast can be obtained even without lighting up the auxiliary light source 10.

Operation of this embodiment when no voltage is applied to the liquid crystal cell 3 is described hereinafter by referring to the optical path line 20.

External light incoming from the viewer's side falls on the first polarizer 1, and only a linearly polarized light component thereof, vibrating in the direction of the transmission axis of the first polarizer 1, parallel to the plane of the figure, is transmitted therethrough while a linearly polarized light component thereof, vibrating in the direction orthogonal to the plane of the figure is absorbed. The linearly polarized light component as transmitted falls on the retardation film 2 and the liquid crystal cell 3.

At this time, the linearly polarized light component falling thereon outgoes as elliptically polarized light that can be regarded as a linearly polarized light component, optically rotated through about 90° by the agency of the retardation film 2 and the liquid crystal cell 3, and vibrating in the direction orthogonal to the plane of the figure.

Outgoing polarized light undergoes scattering at the optical scattering layer 4, but falls on the second polarizer 5 without changing a state of polarization thereof.

As a linearly polarized light component falling thereon at this point in time vibrates in the direction orthogonal to the transmission axis of the second polarizer 5, the linearly polarized light component is reflected, and is sent back to the liquid crystal cell 3, traveling back along the same optical path before returning to the viewer's side.

Hereupon, not less than about 20% or more of the external light is reflected and is sent back to the viewer's side, so that the viewer can visually recognize a display as a bright display.

Another operation of this embodiment when a voltage is applied to the liquid crystal cell 3 will be described as follows. The external light incoming from the viewer's side as transmitted through the first polarizer 1 is not subjected to optical rotation through 90° by the agency of the liquid crystal cell 3, and falls on the optical scattering layer 4 and the second polarizer 5, keeping in a state of the linearly polarized light component vibrating in the direction parallel to the plane of the figure.

As the direction of vibration of the linearly polarized light component coincides with the transmission axis of the second polarizer 5 at this point in time, the linearly polarized light component is transmitted through the second polarizer 5 as well, and falls on the optical semi-absorption layer 7.

Since the optical semi-absorption layer 7 has a transmittance of about 60% in the visible light region, about 40% of light is absorbed thereby. Remaining 60% of the linearly polarized light component falls on the third polarizer 6.

Because the direction of vibration of the linearly polarized light component falling thereon coincides with the transmission axis of the third polarizer 6, the linearly polarized light component is transmitted through the third polarizer 6 as well, falls on the auxiliary light source 10, is somewhat unpolarized inside the auxiliary light source 10 before being reflected thereby, subsequently being sent back to the third polarizer 6.

Hereupon, only a linearly polarized light component vibrating in the direction of the transmission axis of the third polarizer 6 is transmitted therethrough, and falls on the optical semi-absorption layer 7, whereupon 40% of light is absorbed, and the rest thereof is sent back to the viewer's side.

According to the results of measurement taken by the inventors, a quantity of light sent back to the viewer's side was 2% or less.

Accordingly, the viewer can visually recognize a display as a dark display. By disposing the optical semi-absorption layer 7, reflectance of this embodiment was lowered down to 2% or less as compared with reflectance at 5% in the case of the first embodiment.

As a result, the viewer can visually recognize a display as a darker display. In other words, it means that display contrast at the time of making use of the external light is enhanced. Described above is the operation for effecting bright and dark displays, respectively, at the time of making use of the external light.

In another case where a sufficient quantity of external light is not available due to a dark environment, the liquid crystal display device according to this embodiment functions as a transmissive liquid crystal display device making use of auxiliary light by lighting up the auxiliary light source 10.

Operation in this case is similar to that for the first embodiment except only that light is transmitted once through the optical semi-absorption layer 7. As 40% of a quantity of light falling thereon is absorbed thereby, about 10% of outgoing light from the auxiliary light source 10 is transmitted to the viewer's side.

Optical path lines 22 and 23 shown in Fig. 4 indicate optical paths when no voltage is applied to the liquid crystal cell 3 and when a voltage is applied thereto, respectively. It is shown in the figure that a portion of a linearly polarized light component transmitted through the third polarizer 6 is absorbed by the optical semi-absorption layer 7.

However, since about 40% of the linearly polarized light component traveling along either the optical path line 22 or the optical path line 23 are absorbed, it means that 40% of light is absorbed as seen from the viewer's side either at the time of effecting a bright display or at the time of effecting a dark display. Consequently, a decrease in contrast does not occur although a decrease in screen luminance occurs. Described above is the operation for effecting bright and dark displays, respectively, at the time of making use of the auxiliary light source.

It is clear from the foregoing description that, with this embodiment as well, a bright display as well as a dark display in high contrast can be effected at the time of making use of either external light or the auxiliary light source as with the case of utilizing the conventional technology.

Reduction in display unevenness occurring at the time of making use of the auxiliary light source, which is an object of the invention, is hereinafter described.

As with the case of the first embodiment, since the liquid crystal display device according to this embodiment is provided with the third polarizer 6, a linearly polarized light component of the outgoing light from the auxiliary light source 10, vibrating in the direction parallel to the transmission axis of the third polarizer 6, is transmitted therethrough, and a linearly polarized light component thereof, vibrating in the direction orthogonal to the transmission axis, is absorbed.

Further, as the transmission axis of the third polarizer 6 coincides with that of the second polarizer 5, the linearly polarized light component transmitted through the third polarizer 6 is transmitted through the second polarizer 5 as well.

On the other hand, as the linearly polarized light component vibrating in the direction orthogonal to the plane of the figure hardly falls on the second polarizer 5, there is no possibility of transmitted light becoming uneven across the surface of the second polarizer 5 even if wavelength dependency of transmittance of the second polarizer 5 is uneven across the surface thereof.

Even if the optical semi-absorption layer 7 is interposed between the second polarizer 5 and the third polarizer 6 as with this embodiment, there will occur no change in a state of polarization, and in that the linearly polarized light component vibrating in the direction orthogonal to the plane of the figure does not fall on the second polarizer 5 except only that the linearly polarized light component vibrating in the direction parallel to the plane of the figure undergoes attenuation.

Accordingly, display unevenness is not visible at all on the viewer's side.

Thus, by reducing a quantity of the linearly polarized light component vibrating in the direction parallel to the reflection axis of the second polarizer 5 before the light falls thereon, degradation of image quality due to unevenness in a reflective polarization degree of the second polarizer 5 across the surface thereof can be prevented.

Further, by disposing the optical semi-absorption layer 7, it becomes possible to realize a display without display unevenness while enhancing contrast at the time of making use of the external light.

With this embodiment, the optical semi-absorption layer 7 is disposed between the reflection-type polarizer and the absorption-type polarizer, however, a configuration of these part is not limited thereto.

As can be easily presumed from the foregoing description, the optical semi-absorption layer 7 may be disposed at any suitable position on the underside of the second polarizer 5 shown in Fig. 4 as seen from the viewer's side, as long as is on the optical path line 21.

Similar effects can be obtained even if the optical semi-absorption layer 7 is disposed at any of positions, for example, underneath a prismatic sheet which is a constituting member of the auxiliary light source 10, underneath a scattering film disposed underneath the prismatic sheet, and underneath an optical guide plate.

Further, it is to be pointed out that the position of the third polarizer 6 is not limited to that as shown in the figure. By disposing the third polarizer 6, for example, underneath the prismatic sheet or the scattering film, similar effects can be obtained.

In this case, caution is required because, if material interposed between the second polarizer 5 and the third polarizer 6 has anisotropy in refractive index, and the like, linearly polarized light is turned into elliptically polarized light, thereby detracting the advantageous effects.

With this embodiment, an absorption-type polarizer is disposed as the third polarizer 6, however, a reflection-type polarizer may be disposed in place of the absorption-type polarizer.

In such a case, a configuration is adopted such that the respective transmission axes thereof coincide with each other, and the reflection-type polarizers are disposed so as to sandwich the optical semi-absorption layer 7 therebetween. By use of two sheets of the reflection-type polarizers, a polarization degree thereof is in effect enhanced, and consequently, the wavelength dependency of the polarization degree of the reflection-type polarizers is lessened. According to the results of tests conducted by the inventors, an effect similar to that in the case where the absorption-type polarizer is disposed was obtained.

Further, as the reflection-type polarizer is disposed directly above the auxiliary light source 10, a linearly polarized light component of the outgoing light from the auxiliary light source 10, vibrating in the direction of the reflection axis of the reflection-type polarizer, is sent back to the auxiliary light source 10, and is reflected thereby while being unpolarized, so that a portion of the linearly polarized light component, as a linearly polarized light component vibrating in the direction of the transmission axis of the reflection-type polarizer, is transmitted therethrough. Thus, there occurs recycling of auxiliary light from the auxiliary light source, so that display luminance as seen from the viewer's side is in effect improved. It is possible to improve the display luminance about 1.6 times by optimally selecting a thickness, and so forth, of the optical guide plate 14 of the auxiliary light source 10.

As described above, with the liquid crystal display device employing the reflection-type polarizer, according to this embodiment of the invention, display unevenness can be nearly completely eliminated without impairing contrast and screen luminance.

### INDUSTRIAL APPLICABILITY

As described hereinbefore, the liquid crystal display device according to the invention adopts a configuration wherein outgoing light emitted from an auxiliary light source is divided by a third polarizer into predetermined linearly polarized light components, which subsequently fall on a reflection-type polarizer serving as a second polarizer. Accordingly, even if a spectral characteristic of reflectance of the reflection-type polarizer has wavelength dependency and further the spectral characteristic of reflectance is uneven across the surface of the reflection-type polarizer, an incoming linearly polarized light component vibrating in the direction of the reflection axis of the reflection-type polarizer will have undergone sufficient attenuation, so that the incoming linearly polarized light component will have no effect on the spectral characteristic of reflectance, and adverse effects on display quality will be eliminated.

Hence, it is possible to provide the liquid crystal display device capable of effecting high quality display without causing any display unevenness at all at the time of making use of an auxiliary light source.

## Claims

1. A liquid crystal display device comprising:
a liquid crystal cell comprised of a first substrate and a second substrate, each transparent, disposed with a predetermined spacing so as to oppose each other, and a liquid crystal layer sealed in a gap formed therebetween, capable of exerting optical changes on incident light by applying a voltage to the liquid crystal layer,
a first polarizer installed on an outer side of the first substrate disposed on a visible side of the liquid crystal cell;
a second polarizer installed on an outer side of the second substrate disposed on a side of the liquid crystal cell, opposite from the visible side thereof; and
an auxiliary light source disposed on a side of the second polarizer, opposite from the liquid crystal cell,
wherein the first polarizer is a polarizer allowing a first linearly polarized light component to pass therethrough,
the second polarizer is a polarizer reflecting a second linearly polarized light component while allowing a third linearly polarized light component vibrating in a direction orthogonal to a direction of vibration of the second linearly polarized light component to pass therethrough,
a third polarizer allowing a fourth linearly polarized light component to pass therethrough is disposed between the second polarizer and the auxiliary light source, and
an intersecting angle formed by the direction of vibration of the third linearly polarized light component and that of the fourth linearly polarized light component is in a range of minus 45 degrees to plus 45 degrees.

2. A liquid crystal display device according to claim 1, wherein the third polarizer is an absorption-type polarizer allowing the fourth linearly polarized light component to pass therethrough while absorbing a fifth linearly polarized light component vibrating in a direction orthogonal to the direction of vibration of the fourth linearly polarized light component.

3. A liquid crystal display device according to claim 1, wherein the third polarizer is a reflection-type polarizer allowing the fourth linearly polarized light component to pass therethrough while reflecting a fifth linearly polarized light component vibrating in a direction orthogonal to the direction of vibration of the fourth linearly polarized light component

4. A liquid crystal display device according to claim 1, wherein the auxiliary light source is a backlight device making use of a cold cathode tube.

5. A liquid crystal display device according to claim 1, wherein the auxiliary light source is a backlight device making use of a light emitting diode.

6. A liquid crystal display device according to claim 1, wherein the auxiliary light source is a backlight device making use of an electroluminescent device.

7. A liquid crystal display device according to claim 1, wherein the third polarizer is bonded to the second polarizer.

8. A liquid crystal display device according to claim 1, wherein the third polarizer is fixedly attached to the auxiliary light source or a constituting member thereof, and is separated from the second polarizer.

9. A liquid crystal display device according to claim 1, wherein an optical scattering layer is installed at any suitable position on a visible side of the second polarizer.

10. A liquid crystal display device comprising:
a liquid crystal cell comprised of a first substrate and a second substrate, each transparent, disposed with a predetermined spacing so as to oppose each other, and a liquid crystal layer sealed in a gap formed therebetween, capable of exerting optical changes on incident light by applying a voltage to the liquid crystal layer,
a first polarizer installed on an outer side of the first substrate disposed on a visible side of the liquid crystal cell;
a second polarizer installed on an outer side of the second substrate disposed on a side of the liquid crystal cell, opposite from the visible side thereof; and
an auxiliary light source disposed on a side of the second polarizer, opposite from the liquid crystal cell,
wherein the first polarizer is a polarizer allowing a first linearly polarized light component to pass therethrough,
the second polarizer is a polarizer reflecting a second linearly polarized light component while allowing a third linearly polarized light component vibrating in a direction orthogonal to a direction of vibration of the second linearly polarized light component to pass therethrough,
a third polarizer allowing a fourth linearly polarized light component to pass therethrough is disposed between the second polarizer and the auxiliary light source,
an optical semi-absorption layer is disposed at any of positions between the second polarizer and the third polarizer, between the third polarizer and the auxiliary light source, and between constituents of the auxiliary light source, and
the direction of vibration of the third linearly polarized light component substantially coincide with that of the fourth linearly polarized light component.

11. A liquid crystal display device according to claim 10, wherein the third polarizer is an absorption-type polarizer allowing the fourth linearly polarized light component to pass therethrough while absorbing a fifth linearly polarized light component vibrating in a direction orthogonal to the direction of vibration of the fourth linearly polarized light component.

12. A liquid crystal display device according to claim 10, wherein the third polarizer is a reflection-type polarizer allowing the fourth linearly polarized light component to pass therethrough while reflecting a fifth linearly polarized light component vibrating in a direction orthogonal to the direction of vibration of the fourth linearly polarized light component.

13. A liquid crystal display device according to claim 10, wherein the auxiliary light source is a backlight device making use of a cold cathode tube.

14. A liquid crystal display device according to claim 10, wherein the auxiliary light source is a backlight device making use of a light emitting diode.

15. A liquid crystal display device according to claim 10, wherein the auxiliary light source is a backlight device making use of an electroluminescent device.

16. A liquid crystal display device according to claim 10, wherein the third polarizer is bonded to the second polarizer.

17. A liquid crystal display device according to claim 10, wherein the third polarizer is fixedly attached to the auxiliary light source or a constituting member thereof, and is separated from the second polarizer.

18. A liquid crystal display device according to claim 10, wherein the optical semi-absorption layer has a uniform absorption characteristic substantially in an entire visible light region and absorptivity thereof is 60% or less.

19. A liquid crystal display device according to claim 10, wherein an optical scattering layer is installed at any suitable position on a visible side of the second polarizer.
